Europäisches Patentamt

European Patent Office

Office européen des brevets

(19)

(11) Veröffentlichungsnummer : **0 064 768**
B1

(12) EUROPÄISCHE PATENTSCHRIFT

(45) Veröffentlichungstag der Patentschrift :
27.07.88

(21) Anmeldenummer : 82104141.5

(22) Anmeldetag : 12.05.82

(51) Int. Cl.⁴ : **F 16 B 13/14, F 16 B 13/04**

(54) Spreizdübel aus Kunststoff.

(30) Priorität : 13.05.81 DE 3119041

(43) Veröffentlichungstag der Anmeldung :
17.11.82 Patentblatt 82/46

(45) Bekanntmachung des Hinweises auf die Patenterteilung : 27.07.88 Patentblatt 88/30

(84) Benannte Vertragsstaaten :
AT BE CH FR GB IT LI NL SE

(56) Entgegenhaltungen :
EP-A- 0 013 911
GB-A-   997 711
US-A- 3 483 787
US-A- 3 810 279

(73) Patentinhaber : HILTI Aktiengesellschaft

FL-9494 Schaan (LI)

(72) Erfinder : Siebrecht-Reuter, Gerd, Dipl.-Ing.
Eichenstrasse 1
D-8061 Deutenhausen (DE)

(74) Vertreter : Wildi, Roland
Hilti Aktiengesellschaft Patentabteilung
FL-9494 Schaan (LI)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft einen Spreizdübel aus Kunststoff mit einem im wesentlichen zylindrischen Dübelkörper, der wenigstens entlang einem Teil seiner Länge durch Einschnitte gebildete Lamellen aufweist, wobei die Einschnitte senkrecht zu einer parallel zur Dübellängsachse verlaufenden Ebene stehen und zur Dübellängsachse geneigt sind.

Ein bekannter Spreizdübel EP-A-0 013 911 weist an seinem Schaft zur Dübellängsachse geneigte, untereinander parallele Einschnitte auf, durch welche am Schaft Lamellen gebildet werden. Die Lamellen weisen alle gleiche Form auf. Um eine genügende Elastizität der einzelnen Lamellen zu erreichen, müssen die Einschnitte nahe beieinander angeordnet werden. Dies ergibt ein relativ aufwendiges Spritzwerkzeug und daher hohe Herstellkosten. Die Lamellen sollen jedoch nicht nur zur Anpassung an den Bohrlochdurchmesser federnd ausgebildet sein, sondern zur Verankerung auch eine Stützfunktion ausüben. Die Lamellen sollen somit einerseits elastisch und andererseits relativ steif ausgebildet werden. Diese Anforderungen sind einander entgegengesetzt und können daher von ein und derselben Lamelle nicht gleichzeitig optimal erfüllt werden.

Der Erfindung liegt die Aufgabe zugrunde, einen Spreizdübel mit durch Einschnitte gebildeten Lamellen zu schaffen, der einerseits eine gute Anpassung an den Bohrlochdurchmesser und andererseits einen hohen Auszugswert aufweist.

Gemäss der Erfindung wird dies dadurch erreicht, dass die Neigung zweier benachbarter Einschnitte unterschiedlich gross ist.

Durch die unterschiedliche Neigung der Einschnitte entstehen verschieden geformte Lamellen. Dabei können die einen sich gegen den Fuss hin verkleinernden Querschnitt aufweisenden Lamellen als Federlamellen und die Lamellen, deren Querschnitt sich gegen den Fuss hin vergrössert, als Stützlamellen bezeichnet werden. Die Aufgaben Stützen und Federn werden somit unterschiedlichen Lamellen zugeordnet, die für diese Funktion optimal ausgebildet werden können.

In der Funktion ergänzen sich die Feder- und die Stützlamellen. Damit diese wechselweise aufeinander folgen, ist es zweckmässig, dass die Einschnitte wechselweise zueinander parallel angeordnet sind. Durch diese Anordnung der Einschnitte entsteht je ein Typ von Federlamelle und Stützlamelle. Erforderlichenfalls können am Schaft des Dübelkörpers auch Bereiche mit untereinander gleichen, gegenüber den anderen Bereichen jedoch unterschiedlichen Feder- und Stützlamellen geschaffen werden.

Im Prinzip können die Einschnitte beliebig angeordnet werden. Für eine optimale Ausbildung der Lamellen ist es jedoch vorteilhaft, dass die einen Einschnitte senkrecht und die anderen Einschnitte unter einem spitzen Winkel zur Dübellängsachse gegen das rückwärtige Ende des Dübelkörpers geneigt sind. Durch eine solche Anordnung der Einschnitte erhalten die Federlamellen eine widerhakenartige Form, dh beim Einschieben des Dübels legen sich diese an den Dübelkörper an. Beim Herausziehen des Dübels verkrallen sich diese jedoch in der Bohrlochwandung bzw an Vorsprüngen, Stegen und dgl beispielsweise bei Lochsteinen. Die sich dabei ergebenden Stützlamellen sind keilförmig mit gegen das vordere Ende des Dübelkörpers gerichteten, schrägen Flanken ausgebildet und weisen eine hohe Biegesteifigkeit auf. Die zur Dübellängsachse geneigten Einschnitte können untereinander parallel verlaufen oder unterschiedliche Neigungswinkel zur Dübellängsachse aufweisen. Je nachdem ergeben sich gleiche oder verschiedenartig geformte Feder- und Stützlamellen.

Aus herstellungstechnischen Gründen ist es zweckmässig, dass die Einschnitte von zwei einander gegenüberliegenden Seiten her gegen das Zentrum des Dübelkörpers gerichtet sind. Bei vorzugsweise durch Spritzguss hergestellten Kunststoffdübeln können somit einfache zweiteilige Formen verwendet werden. Für grössere Dübeldurchmesser können bei entsprechend aufwendigeren Spritzformen auch drei, vier oder mehr Einschnitte am Umfang der Dübelkörper vorgesehen werden.

Die Erfindung soll nachstehend anhand der sie beispielsweise wiedergebenden Zeichnungen näher erläutert werden. Es zeigen :

Fig. 1  einen erfindungsgemässen Spreizdübel in unverformtem Zustand,

Fig. 2  einen Querschnitt durch den Spreizdübel gemäss Fig. 1 entlang der Linie II-II,

Fig. 3  einen Ausschnitt des in Fig. 1 dargestellten, in ein Aufnahmematerial eingesetzten Spreizdübels,

Fig. 4  einen Querschnitt eines weiteren erfindungsgemässen Spreizdübels.

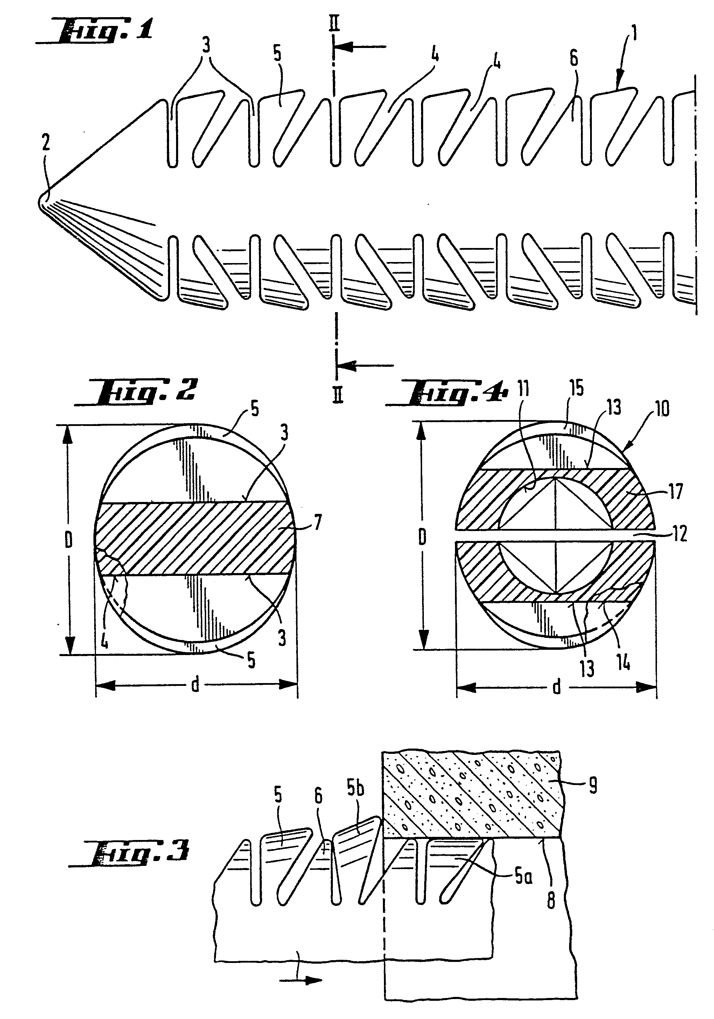

Der aus Fig. 1 ersichtliche Spreizdübel weist einen insgesamt mit 1 bezeichneten Dübelkörper auf. Das vordere Ende des Dübelkörpers 1 ist beispielsweise als Spitze 2 ausgebildet. Der Dübelkörper 1 ist entlang einem Teil seiner Länge mit Einschnitten 3, 4 versehen. Durch die Einschnitte 3, 4 werden am Schaft des Dübelkörpers 1 Lamellen gebildet. Die Einschnitte 3, 4 stehen senkrecht zu einer parallel zur Dübellängsachse verlaufenden Ebene und sind zur Dübellängsachse geneigt. Die Neigung zweier benachbarter Einschnitte 3, 4 ist unterschiedlich gross. Durch die unterschiedliche Neigung der Einschnitte 3, 4 werden verschiedenartig geformte Lamellen gebildet. Die Einschnitte 3, 4 sind wechselweise zueinander parallel angeordnet. Die Einschnitte 3 stehen senkrecht zur Dübellängsachse und die Einschnitte 4 sind unter einem spitzen Winkel zur Dübellängsachse gegen das rückwärtige Ende des Dübelkörpers 1 geneigt. Es entstehen somit zwei Typen von Lamellen, nämlich Federlamellen 5, deren Querschnitt sich gegen das Zentrum des Dübelkörpers verjüngt, und Stützlamellen 6, deren Querschnitt sich gegen das Zentrum des Dübelkörpers 1 erweitert. Die Federlamellen 5 sind über eine Art Gelenk mit dem Dübelkörper 1 verbunden und lassen sich relativ leicht in Längsrichtung des Spreizdübels bewegen. Die Stützlamellen 6 dagegen sind praktisch starr ausgebildet.

Der in Fig. 2 dargestellte Querschnitt durch den Spreizdübel gemäss Fig. 1 zeigt die von zwei einander gegenüberliegenden Seiten her gegen das Zentrum des Dübelkörpers 1 gerichteten Einschnitte 3. Der zwischen den Einschnitten 3 verbleibende Restquerschnitt 7 ist so gross dimensioniert, dass seine Reissfestigkeit grösser ist als der Mindestauszugswert des Spreizdübels. Wie die Figur zeigt, ist die Abmessung D grösser als die Abmessung d, die im wesentlichen dem vorgesehenen Bohrlochdurchmesser entspricht. Die federnde Ausbildung der Federlamellen 5 ermöglicht dennoch das Einführen des Spreizdübels, da die Federlamellen 5 sich an den Dübelkörper 1 anlegen. Aufgrund der Rückstellkraft entsteht beim Einführen des Dübelkörpers 1 in ein Bohrloch eine selbsttätige Verspreizung in Auszugsrichtung.

Fig. 3 zeigt einen Ausschnitt des in ein Bohrloch 8 eines Aufnahmematerials 9 eingesetzten Dübelkörpers 1. Beim Einführen des Dübelkörpers 1 in das Bohrloch legen sich die Federlamellen 5 an den Dübelkörper 1 an, wie dies bei der Federlamelle 5a gezeigt ist. Weist das Aufnahmematerial 9 Vorsprünge und/oder Hohlräume auf, so federn die Federlamellen 5 zurück und hintergreifen diese, wie dies beispielsweise bei der Federlamelle 5b gezeigt ist. Bei Belastung des Dübelkörpers stützen sich die Federlamellen 5 auf den Stützlamellen 6 in axialer Richtung ab. Dabei lassen sich sehr hohe Auszugswerte erreichen. Die Federlamellen 5 und die Stützlamellen 6 ergänzen sich also in idealer Weise. Je nach Beschaffenheit des Aufnahmematerials, bspw bei Mauerwerk, können auch mehrere Federlamellen 5 das Aufnahmematerial 9 hintergreifen und sich an Stützlamellen 6 abstützen.

Der in Fig. 4 dargestellte Querschnitt durch einen weiteren erfindungsgemässen Spreizdübel zeigt einen Dübelkörper 10 mit einer zentralen Aufnahmebohrung 11, in welche zur radialen Aufweitung in bekannter Weise ein Spreizelement eingetrieben werden kann. Seitliche, axial verlaufende Längsschlitze 12 dienen der radialen Aufweitbarkeit des Dübelkörpers 10, wobei die Federlamellen 15 einen verstärkten Formschluss mit der Bohrlochwandung bzw Vorsprüngen, Stegen oder dgl erzeugen. Die Einschnitte 13, 14 sind ebenfalls nur so tief, dass die Reissfestigkeit des verbleibenden Restquerschnitts 17 grösser ist als der Mindestauszugswert des Spreizdübels.

## Patentansprüche

1. Spreizdübel aus Kunststoff mit einem im wesentlichen zylindrischen Dübelkörper, der wenigstens entlang einem Teil seiner Länge durch Einschnitte gebildete Lamellen aufweist, wobei die Einschnitte senkrecht zu einer parallel zur Dübellängsachse verlaufenden Ebene stehen und zur Dübellängsachse geneigt sind, dadurch gekennzeichnet, dass die Neigung zweier benachbarter Einschnitte (3, 4, 13, 14) unterschiedlich gross ist.

2. Spreizdübel nach Anspruch 1, dadurch gekennzeichnet, dass die Einschnitte (3, 4, 13, 14) wechselweise zueinander parallel angeordnet sind.

3. Spreizdübel nach Anspruch 1 oder 2, dadurch gekennzeichnet, dass die einen Einschnitte (3, 13) senkrecht und die anderen Einschnitte (4, 14) unter einem spitzen Winkel zur Dübellängsachse gegen das rückwärtige Ende des Dübelkörpers (1, 10) geneigt sind.

4. Spreizdübel nach einem der Ansprüche 1 bis 3, dadurch gekennzeichnet, dass die Einschnitte (3, 4, 13, 14) von zwei einander gegenüberliegenden Seiten her gegen das Zentrum des Dübelkörpers (1, 10) gerichtet sind.

## Claims

1. Expansible dowel made of plastics material comprising a substantially cylindrical dowel body which has at least along a part of its length lamella formed by notches in which respect the notches stand perpendicular to a plane extending parallel to the longitudinal axis of the dowel and are inclined to the longitudinal axis of the dowel, characterised in that the inclination of two neighbouring notches (3, 4, 13, 14) is of different magnitude.

2. Expansible dowel according to claim 1, characterised in that the notches (3, 4, 13, 14) are alternately arranged parallel to one another.

3. Expansible dowel according to claim 1 or 2, characterised in that some notches (3, 13) are perpendicular and other notches (4, 14) are inclined at an acute angle to the longitudinal axis of the dowel towards the rearward end of the dowel body (1, 10).

4. Expansible dowel according to one of claims 1 to 3, characterised in that the notches (3, 4, 13, 14) are directed from two mutually opposite sides towards the centre of the dowel body (1, 10).

## Revendications

1. Cheville expansible en matière plastique avec un corps de cheville sensiblement cylindrique qui présente, au moins sur une partie de sa longueur, des lamelles constituées par des entailles, les entailles étant orientées perpendiculairement à un plan parallèle à l'axe longitudinal de la cheville et inclinées par rapport à cet axe, caractérisée en ce que deux entailles voisines (3, 4, 13, 14) présentent des inclinaisons différentes.

2. Cheville expansible selon la revendication 1, caractérisée en ce que les entailles (3, 4, 13, 14) sont alternativement parallèles les unes aux autres.

3. Cheville expansible selon l'une des revendications 1 ou 2, caractérisée en ce qu'un groupe d'entailles (3, 13) est orienté perpendiculairement et l'autre groupe d'entailles (4, 14) sous un angle aigu par rapport à l'axe longitudinal de la cheville en direction de l'extrémité postérieure du corps de cheville (1, 10).

4. Cheville expansible selon l'une quelconque des revendications 1 à 3, caractérisée en ce que les entailles (3, 4, 13, 14) sont dirigées, à partir de deux côtés diamétralement opposés, vers le centre du corps de cheville (1, 10).

**Fig. 1**

**Fig. 2**

**Fig. 4**

**Fig. 3**